Europäisches Patentamt

European Patent Office

Office européen des brevets

(11) Veröffentlichungsnummer: **0 108 289**
**B1**

⑩

(12) **EUROPÄISCHE PATENTSCHRIFT**

(45) Veröffentlichungstag der Patentschrift:
**11.05.88**

(51) Int. Cl.⁴: **B 62 D 65/00,** B 05 B 13/02

(21) Anmeldenummer: **83110290.0**

(22) Anmeldetag: **15.10.83**

(54) **Vorrichtung zur Oberflächenbehandlung von Kraftfahrzeugkarossen.**

(30) Priorität: **05.11.82 DE 3240835**

(43) Veröffentlichungstag der Anmeldung:
**16.05.84 Patentblatt 84/20**

(45) Bekanntmachung des Hinweises auf die Patenterteilung:
**11.05.88 Patentblatt 88/19**

(84) Benannte Vertragsstaaten:
**BE DE FR GB IT NL SE**

(56) Entgegenhaltungen:
**CH - A - 424 553**
**US - A - 3 297 132**

(73) Patentinhaber: **Dürr GmbH, Spitalwaldstrasse 18,
D-7000 Stuttgart 40 (DE)**
Patentinhaber: **Behr Industrieanlagen GmbH & Co.,
Talstrasse 14 Postfach 40, D-7121 Ingersheim 1 (DE)**

(72) Erfinder: **Hauelse, Rolf, Erwin-Bälz-Strasse 65,
D-7120 Bietigheim-Bissingen (DE)**
Erfinder: **Martin, Wolfram, Sommerhaldenstrasse 21,
D-7144 Erdmannshausen (DE)**
Erfinder: **Sannert, Manfred, Weinstrasse 34,
D-7121 Gemmrigheim (DE)**
Erfinder: **Behr, Hans, Lenzhalde 82,
D-7000 Stuttgart 1 (DE)**

(74) Vertreter: **Hoeger, Stellrecht & Partner,
Uhlandstrasse 14c, D-7000 Stuttgart 1 (DE)**

**Beschreibung**

Die Erfindung betrifft eine Vorrichtung zur Oberflächenbearbeitung von Kraftfahrzeugkarossen, insbesondere zum Lackieren, mit einer eine Anzahl von Karossen hintereinander längs einer Vorschubstrecke bewegenden Transporteinrichtung und mit längs der Vorschubstrecke stationär angeordneten Bearbeitungsgeräten, welche die vorbeibewegten Karossen bearbeiten.

Vorrichtung dieser Art werden allgemein eingesetzt, um Kraftfahrzeugkarossen zu reinigen, mit Rostschutzmittel zu versehen, zu lackieren oder zu beschichten. Bei bisher bekannten Vorrichtungen dieser Art werden die zu behandelnden Kraftfahrzeugkarossen hintereinander durch ein tunelförmiges Gehäuse transportiert und während des Transportes mittels stationär in dem Gehäuse angeordneten Bearbeitungsautomaten in der gewünschten Weise bearbeitet. Dabei werden eine Vielzahl von Arbeitsgängen hintereinander ausgeführt, so dass sich teilweise sehr lange Anlagen ergeben. Die Bearbeitungsschritte sind unterschiedlich kompliziert und unterschiedlich zeitaufwendig, beispielsweise lässt sich eine Aussenfläche eines Kraftfahrzeuges leichter bearbeiten als Türfalze oder Motorhaubeninnenflächen.

Damit durch die zeitaufwendigen Bearbeitungsschritte der Durchsatz durch die Anlage nicht gestört wird, ist es notwendig, diese Bearbeitungsschritte einer Vielzahl von Automaten zu übertragen, diese Bearbeitungsschritte also zu zerlegen, oder aber den Taktabstand zwischen aufeinanderfolgenden Karossen zu erhöhen. Nachteilig ist bei diesen Anlagen ausserdem, dass beim Ausfall eines einzigen Gerätes die gesamte Anlage stillgelegt werden muss.

Schwierigkeiten ergeben sich bei dieser Art der Bearbeitung insbesondere auch bei der Innenraumbearbeitung, da Behandlungsautomaten, die in den Innenraum der längs der Vorschubstrecke bewegten Karosse hineinragen, mit dieser Karosse fortbewegt werden müssen. Dies kompliziert den Aufbau der Bearbeitungsgeräte zusätzlich, da diese nicht mehr stationär ausgebildet werden können.

Es ist Aufgabe der Erfindung, eine gattungsgemässe Vorrichtung derart zu verbessern, dass komplizierte Bearbeitungsschritte, insbesondere die Innenraumbearbeitung von Kraftfahrzeugkarossen, vereinfacht wird und dass ausserdem bei Störungen einzelner Bearbeitungsgeräte trotzdem der Durchsatz durch die Vorrichtung zumindest teilweise aufrechterhalten bleiben kann.

Diese Aufgabe wird bei einer Vorrichtung der eingangs beschriebenen Art erfindungsgemäss dadurch gelöst, dass seitlich der Vorschubstrecke mindestens zwei Stellplätze für die Karossen vorgesehen sind, dass jedem Stellplatz eine Verschiebeeinrichtung zugeordnet ist, welche eine Karosse von der Vorschubstrecke quer zu dieser auf den Stellplatz und nach einer Verweildauer auf dem Stellplatz wieder quer zur Vorschubstrecke auf diese zurücktransportiert, dass auf dem Stellplatz Bearbeitungsgeräte angeordnet sind, welche die stationär auf dem Stellplatz verweilende Karosse bearbeiten, und dass die Karosse auf dem Stellplatz die Vorschubstrecke freigibt, so dass längs der Vorschubstrecke Karossen an dem Stellplatz vorbeitransportiert werden können.

Bei dieser Ausgestaltung werden also die Karossen zu komplizierten Bearbeitungsvorgängen aus der normalen Vorschubstrecke ausgeschleust und auf einem neben der Vorschubstrecke liegenden Stellplatz während einer bestimmten Verweildauer angehalten, so dass sie auf diesem Stellplatz durch stationär angeordnete Bearbeitungsgeräte behandelt werden können. Die aus der Vorschubstrecke ausgeschleusten Karossen behindern den weiteren Vorschub längs der Vorschubstrecke nicht, das heisst, nachfolgende Karossen können an dem mit einer Karosse belegten Stellplatz vorbei auf nachfolgende Stellplätze transportiert werden, auf denen sie in gleicher Weise behandelt werden. Fallen Bearbeitungsgeräte an einem Stellplatz aus, bleiben die übrigen Stellplätze davon unberührt, d.h. die Behandlung der Kraftfahrzeugkarossen kann – gegebenenfalls mit einem geringeren Durchsatz – fortgesetzt werden.

Bei einer vorteilhaften Ausgestaltung ist vorgesehen, dass die Verschiebeeinrichtung die Karosse nach dem quer zur Vorschubstrecke erfolgenden Ausschleusen aus der Vorschubstrecke parallel zur Vorschubstrecke auf den Stellplatz und sie nach der Verweildauer zunächst parallel zur Vorschubstrecke und anschliessend quer dazu wieder auf die Vorschubstrecke zurückverschiebt.

Bei dieser Ausgestaltung werden also die Karossen auf ihren Stellplatz parallel zur Vorschubstrecke verschoben, so dass auf dem Stellplatz zu beiden Seiten der Karosse stationär Bearbeitungsgeräte angeordnet sein können, die nach dem Einschieben der Karosse auf den Stellplatz auch die Längsseiten der Karosse bearbeiten oder durch Öffnungen in der Längsseite der Karossen in das Innere derselben eintauchen können.

Vorteilhaft ist es, wenn zwei Stellplätze auf gegenüberliegenden Seiten der Vorschubstrecke paarweise angeordnet sind. Auf diese Weise können die Karossen abwechselnd nach links und nach rechts auf die entsprechenden Stellplätze ausgeschleust werden, vorzugsweise mit derselben Verschiebeeinrichtung.

Weiterhin können in Vorschubrichtung hintereinander mehrere Stellplätze oder mehrere Stellplatzpaare angeordnet sein. Bei einer grösseren Zahl von Stellplätzen kann die Verweildauer der Karossen auf den einzelnen Stellplätzen erhöht werden, ausserdem muss die Durchsatzgeschwindigkeit der Gesamtvorrichtung bei Ausfall von Bearbeitungsgeräten in einem Stellplatz weniger stark herabgesetzt werden als bei einer geringeren Anzahl von Stellplätzen in der Vorrichtung.

Vorzugsweise sind die Bearbeitungsgeräte auf allen Stellplätzen gleich und führen dieselben Bearbeitungsschritte aus.

Besonders vorteilhaft ist es, wenn jede Karosse längs der Vorschubstrecke nur auf einen Stellplatz verschoben wird, wenn die Stellplätze von aufeinanderfolgenden Karossen nacheinander besetzt werden und wenn die Karossen in derselben Reihenfolge, in der sie auf die Stellplätze verschoben werden, wieder auf die Vorschubstrecke zurückgeschoben werden. Es werden also durch die aufeinanderfolgenden Karossen nacheinander die Stellplätze aufgefüllt. Sobald der letzte Stellplatz aufgefüllt ist, wird der zuerst belegte Stellplatz wieder freigegeben, die behandelte Karosse wird an den übrigen Stellplätzen vorbei auf der Vorschubstrecke vorgeschoben und die in den Bereich der Stellplätze einfahrende nächste Karosse wird auf den freigewordenen Stellplatz ausgeschleust etc.

Es ist also vorteilhaft, wenn eine Karosse erst vom Stellplatz auf die Vorschubstrecke verschoben wird, wenn alle nachfolgend zu besetzenden Stellplätze besetzt sind.

Es ist weiterhin günstig, wenn die Vorschubgeschwindigkeit der Transporteinrichtung im Bereich der Stellplätze um einen Faktor grösser ist als die Vorschubgeschwindigkeit vor und gegebenenfalls nach den Stellplätzen, der mindestens durch die Zahl der Stellplätze gegeben ist. Dadurch wird eine kontinuierliche Vorschubgeschwindigkeit der Karossen durch die gesamte Vorrichtung hindurch gewährleistet, also auch durch den Bereich der Stellplätze hindurch. Um die Zeitverluste durch das Ein- und Ausschleusen der Karossen zu kompensieren, kann es vorteilhaft sein, wenn der Faktor etwa zweimal so gross ist wie die Zahl der Stellplätze.

Auf jedem Stellplatz können an mindestens einer Längsseite der Karosse Bearbeitungsgeräte angeordnet sein. Wie bereits erwähnt, können diese Bearbeitungsgeräte die Karosse dadurch besonders gut bearbeiten, dass die Karosse parallel zur Vorschubstrecke in den Stellplatz eingeschoben wird.

Weiterhin ist es vorteilhaft, wenn an jedem Stellplatz längs des senkrecht zur Vorschubstrecke verlaufenden Verschiebeweges Bearbeitungsgeräte angeordnet sind, die die Karossen während der Verschiebung senkrecht zur Vorschubstrecke bearbeiten. Diese Bearbeitungsgeräte können insbesondere die Vorder- und Rückseite der Karosse bearbeiten, während die Karosse senkrecht zur Vorschubstrecke an ihnen vorbeigeschoben wird. Dadurch entfällt die Notwendigkeit komplizierter Bearbeitungsgeräte auf der Vorschubstrecke, die vor und hinter den Karossen in die Vorschubstrecke eingefahren werden und zu einer Bearbeitung der Karosse mit konstantem Abstand mit dieser zusammen längs der Vorschubstrecke bewegt werden müssen.

Bei einer bevorzugten Ausführungsform ist vorgesehen, dass jeder Stellplatz im Innern einer abgeschlossenen Kabine angeordnet ist, die nur im Bereich des quer zur Vorschubstrecke verlaufenden Verschiebeweges zur Vorschubstrecke offen ist.

Besonders vorteilhaft ist es, wenn an einem der Stellplätze eine Programmiereinrichtung für die Bearbeitungsgeräte eines Stellplatzes vorgesehen ist, durch die alle gleichartigen Bearbeitungsgeräte an allen Stellplätzen gemeinsam programmierbar sind. Bei den bisher bekannten Anlagen war eine Programmierung der Bearbeitungsgeräte nur in einer speziellen Simulationsanlage möglich, andernfalls hätte der Gesamtbetrieb in der Anlage unterbrochen werden müssen. Durch die Verwendung mehrerer Stellplätze ist es jedoch möglich, die Programmierung an einem der Stellplätze selbst vorzunehmen und den Betrieb trotzdem in einem Umfange aufrechtzuerhalten, der von der Anzahl der übrigen Stellplätze abhängt.

An einem Stellplatz kann weiterhin ein Bearbeitungsgerät angeordnet sein, welches beim parallel zur Vorschubstrecke erfolgenden Verschieben der Karosse auf den Stellplatz durch deren Verschiebebewegung durch eine Öffnung der Karosse in deren Inneres eintaucht. Es ist auf diese Weise möglich, ein Bearbeitungsgerät in das Innere einer Karosse einzuführen, ohne dass das Bearbeitungsgerät selbst eine Bewegung ausführen muss, da das Einschieben des Bearbeitungsgerätes allein durch die Verschiebebewegung der Karosse in Bewegung auf den Stellplatz erfolgt.

Die erfindungsgemässe Ausgestaltung ermöglicht es, komplizierte Bearbeitungsschritte an der stationär gehaltenen Karosse auszuführen. Dadurch werden Schwierigkeiten vermieden, die sich bei einer bewegten Karosse dadurch ergeben, dass aufgrund der Bewegung der Relativabstand zwischen Karosse und Bearbeitungsgeräten nur schwer konstant eingestellt werden und dann konstant gehalten werden kann.

Günstig ist bei der beschriebenen Vorrichtung auch, dass der Platzbedarf der Gesamteinrichtung gegenüber Durchlaufsystemen erheblich reduziert wird.

Die nachfolgende Beschreibung bevorzugter Ausführungsformen der Erfindung dient im Zusammenhang mit der Zeichnung der näheren Erläuterung. Es zeigen:

Figur 1 eine schematische Draufsicht auf eine Behandlungsstrasse für Karossen und

Figur 2 ein abgewandeltes Ausführungsbeispiel einer kleineren Behandlungsanlage für Karossen.

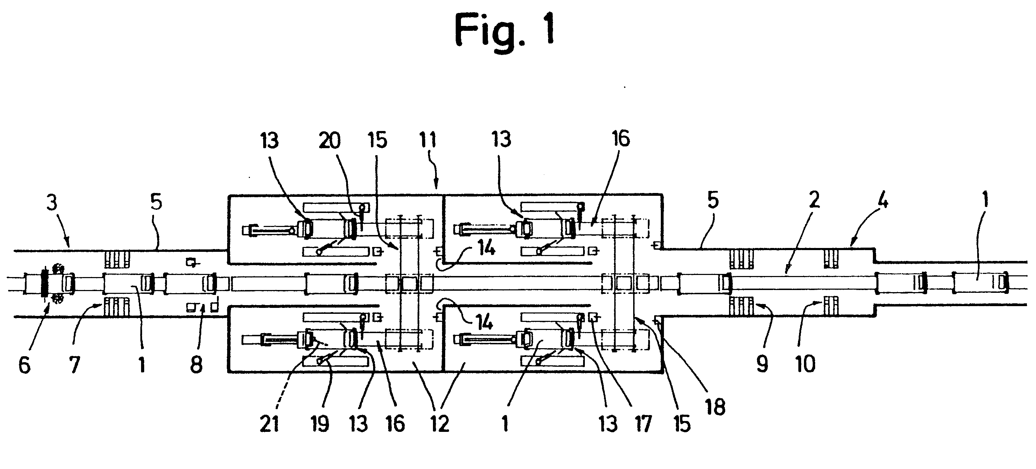

Bei der in Figur 1 dargestellten Behandlungseinrichtung für Karossen, d.h. Karosserien von Kraftfahrzeugen, insbesondere von Personenkraftfahrzeugen, werden eine Vielzahl von Karossen 1 auf einer Transporteinrichtung hintereinander kontinuierlich längs einer Vorschubstrecke 2 vorgeschoben. Die Transporteinrichtung kann beispielsweise ein Doppelkettenförderer sein, möglich ist es auch, die Karosse auf einen Wagen aufzusetzen, der auf Schienen geführt ist. Hier sind dem Fachmann mehrere Möglichkeiten an die Hand gegeben, die entsprechend verwendet werden können.

Im Anfangs- und im Endbereich 3 bzw. 4 befindet sich die Vorschubstrecke 2 in einem Tunnel 5, zu beiden Seiten der Vorschubstrecke sind stationär in dem Tunnel Bearbeitungsgeräte angeordnet, beispielsweise eine Reinigungsanlage 6, eine Beschichtungsanlage 7 zur Beschichtung der Seitenwände und des Daches der Karosse und einzelne Beschichtungsautomaten 8 zur Beschichtung der Karosse mit einer zweiten Beschichtung.

In gleicher Weise sind im Endbereich 4 des Tunnels zu beiden Seiten der Vorschubstrecke weitere Bearbeitungsgeräte stationär angeordnet, beispielsweise Anlagen 9 zum Auftragen einer Metalliclackierung oder Anlagen 10 zum Auftragen einer Klarschichtlackierung. Beim Vorschieben der Karossen längs der Vorschubstrecke werden die einzelnen Karossen von diesen Bearbeitungsgeräten beim Vorbeilaufen nacheinander bearbeitet, wobei die Karossen während des gesamten Bearbeitungsvorganges kontinuierlich an den stationären Bearbeitungsgeräten vorbeigeschoben werden.

Im Mittelbereich 11 der Anlage sind zu beiden Seiten der Vorschubstrecke zwei Kabinen 12 angeordnet, in denen sich jeweils ein Stellplatz 13 für eine Karosse befindet. Bei dem Ausführungsbeispiel der Figur 1 liegen sich jeweils zwei Kabinen 12 paarweise gegenüber, und in Vorschubrichtung liegen zwei Kabinenpaare hintereinander. Die Kabinen sind gleich aufgebaut, aus diesem Grunde wird im folgenden nur eine Kabine ausführlich erläutert.

Jede Kabine ist über eine Einschuböffnung 14 mit der Vorschubstrecke 2 verbunden, die zwischen den paarweise gegenüberliegenden Kabinen hindurchführt und so ausgestaltet ist, dass die Vorschubbewegung der Karossen längs der Vorschubstrecke durch die Kabinen nicht behindert wird.

Im Bereich der Einschuböffnungen 14 befindet sich eine quer zur Vorschubstrecke angeordnete Verschiebeeinrichtung 15, die nach beiden Seiten in die Kabine 12 hineinreicht und der Verschiebung einer längs der Vorschubstrecke vorgeschobenen Karosse in eine der beiden Kabinen dient. Die Verschiebeeinrichtung 15 verschiebt die Karosse bis zu einer weiteren Verschiebeeinrichtung 16 im Inneren der Kabine, die parallel zur Vorschubstrecke 2 angeordnet ist und die Karosse parallel zur Vorschubstrecke auf den Stellplatz 13 vorschiebt. Am Ende dieser Verschiebeeinrichtung 16 wird die Karosse stationär abgestellt.

Zu beiden Seiten der Einschuböffnung 14 befinden sich in der Kabine stationäre Bearbeitungsgeräte 17 und 18, beispielsweise Lackierautomaten, die die Karossen beim Verschieben längs der Verschiebeeinrichtung 15 an ihrer Vorder- und Rückseite bearbeiten, während die Karossen an diesen Bearbeitungsgeräten 17 und 18 vorbeigeschoben werden.

Zu beiden Seiten des Stellplatzes 13 selbst sind weitere Bearbeitungsgeräte 19 und 20 angeordnet, beispielsweise Lackierautomaten, die auch längs des Stellplatzes verschiebbar sein können. Mittels dieser Bearbeitungsgeräte wird vorzugsweise eine Bearbeitung der Karossen im Inneren möglich, beispielsweise können Türfalze, Motordeckelinnenräume, Armaturenbretter, innere Türräume etc. dort bearbeitet werden, beispielsweise lackiert.

Weiterhin ist auf der der Verschiebeeinrichtung 16 gegenüberliegenden Seite der Karosse eine weitere Bearbeitungsanlage 21 angeordnet, die von der rückwärtigen Stirnseite her in das Innere der Karosse eingeführt wird und dort an der Innenseite Bearbeitungsschritte ausführen kann. Dabei kann diese Bearbeitungsanlage 21 in bestimmten Fällen stationär betrieben werden, das Einführen erfolgt allein durch die Bewegung der Karosse unter dem Einfluss der Verschiebeeinrichtung 16.

Beim Betrieb der beschriebenen Vorrichtung werden die Karossen zunächst im Anfangsbereich 3 von der Transportvorrichtung hintereinander an den dort stationär angeordneten Bearbeitungsgeräten, also der Reinigungsanlage 6, der Beschichtungsanlage 7 und den Beschichtungsautomaten 8 vorbei und bis in die Höhe der Einschuböffnungen 14 des ersten Kabinenpaares verschoben. Dort verschiebt die erste Verschiebeeinrichtung 15 die Karosse quer zur Vorschubstrecke in die erste Kabine hinein und übergibt sie an die zweite Verschiebeeinrichtung 16, die die Karosse auf dem Stellplatz dieser Kabine abstellt. Bei diesem Einschieben erfolgt die Bearbeitung mittels der Bearbeitungsgeräte 17 und 18 neben der Einschuböffnung 14, auf dem Stellplatz kann die Innenbearbeitung mittels der Bearbeitungsgeräte 19 und 20 und der Bearbeitungsanlage 21 erfolgen, wobei die Karosse während des gesamten Behandlungsvorganges stationär auf dem Stellplatz 13 verbleibt.

Die nachfolgende Karosse wird von der Transportvorrichtung über die erste Verschiebeeinrichtung 15 in die gegenüberliegende Kabine eingeschoben und von der dort angeordneten zweiten Verschiebeeinrichtung auf dem Stellplatz abgestellt. Hier erfolgt genau in derselben Weise wie in der ersten Kabine die Bearbeitung dieser Karosse. Die beiden nachfolgenden Karossen werden an den ersten beiden Kabinen vorbei zu den weiter vorne liegenden Kabinen transportiert und nacheinander in diesen beiden Kabinen abgestellt, bis alle Kabinen in der aus Figur 1 ersichtlichen Weise mit je einer Karosse besetzt sind, die dort stationär bearbeitet werden.

Sobald alle Kabinen besetzt sind, wird die Karosse, die als erste in eine Kabine eingeschoben worden ist, wieder aus dieser Kabine ausgeschleust und an die Transportvorrichtung übergeben, die die Karosse nunmehr längs der Vorschubstrecke 2 an den anderen besetzten Kabinen vorbei in den Endbereich 4 der gesamten Anlage transportiert, in der die Karosse durch die stationären Anlagen 9 und 10 bearbeitet wird. Der dadurch freigewordene Platz in einer Kabine wird von der nachfolgenden Karosse wieder besetzt usw.

Man erkennt deutlich, dass auf diese Weise für jede Karosse eine wesentlich längere Bearbeitungszeit zur Verfügung steht, als dies bei kontinuierlichem Vorschub längs der Vorschubstrecke der Fall wäre. Ausserdem ist es möglich, die Karosse im stationären Zustand zu bearbeiten, es kann also mit der kontinuierlichen Bewegung der Karossen mitgeführte Bearbeitungsgeräte verzichtet werden. Dadurch wird auch die Genauigkeit der Bearbeitung deutlich erhöht.

Die Transportvorrichtung läuft im Bereich zwischen Anfangs- und Endbereich, also im Bereich der Kabinen, erheblich schneller als im Anfangs- und im Endbereich, beispielsweise kann die Vorschubgeschwindigkeit im Anfangs- und im Endbereich zehnmal kleiner sein als die Vorschubgeschwindigkeit zwischen den Kabinen. Auch die Fördergeschwindigkeit der Verschiebeeinrichtungen 15 und 16 kann grösser gewählt werden als die Transportgeschwindigkeit im Anfangs- und im Endbereich der Vorschubstrecke 2. Dadurch wird gewährleistet, dass die Karossen zwar bei der Bearbeitung relativ langsam an den stationären Bearbeitungsgeräten der Vorschubstrecken vorbeilaufen, dass sie aber in dem Bereich, in dem sie zwischen den Kabinen nur transportiert, nicht aber behandelt werden, rasch vorgeschoben werden, so dass Verzögerungen vermieden werden.

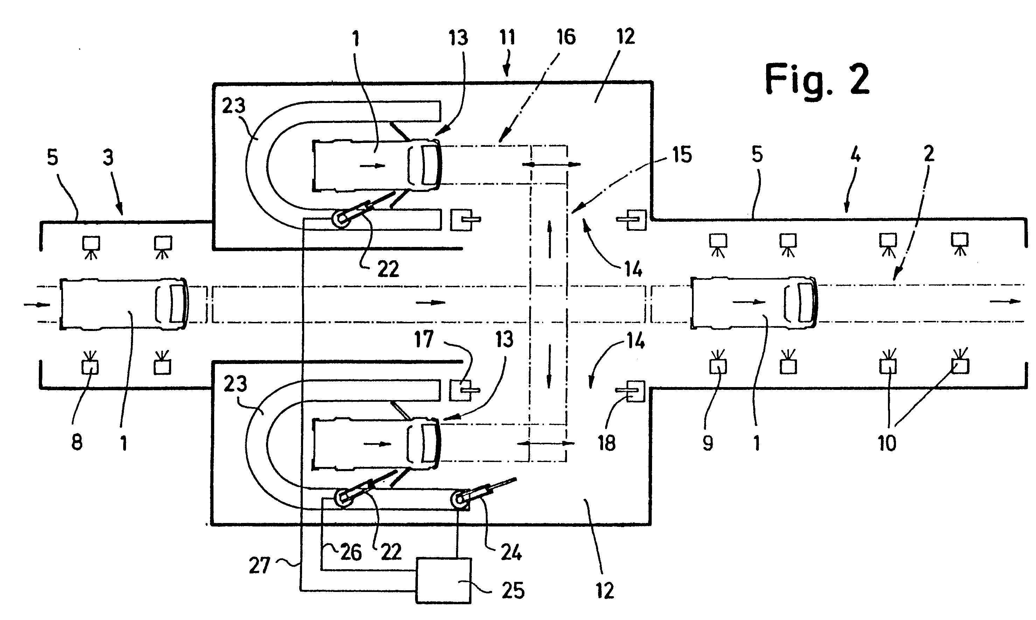

Die Zahl der Kabinen mit Stellplätzen kann selbstverständlich unterschiedlich sein, im Ausführungsbeispiel der Figur 1 sind zwei Kabinenpaare hintereinander angeordnet, es ist auch möglich, diese Kabinenstellplätze nur einseitig vorzusehen, mehrere hintereinander anzuordnen oder aber nur ein Kabinenpaar vorzusehen, wie dies beispielsweise im Ausführungsbeispiel der Figur 2 dargestellt ist. Diese Anordnung gleicht der der Figur 1, entsprechende Teile tragen daher dieselben Bezugszeichen. Im Unterschied zum Ausführungsbeispiel der Figur 1 sind beim Ausführungsbeispiel der Figur 2 Bearbeitungsautomaten 22 vorgesehen, die längs einer hufeisenförmigen Verschiebestrecke 23 um die stationär auf dem Stellplatz stehende Karosse 1 herumbewegbar sind, so dass diese Bearbeitungsgeräte die Karosse von allen Seiten bearbeiten können.

Zusätzlich weist eine der beiden Kabinen ein Programmiergerät 24 auf, das bei ähnlichen Abmessungen wie der Bearbeitungsautomat 22 die gleichen Bewegungen ausführen kann wie der Bearbeitungsautomat 22. Dabei wird das Programmiergerät von Hand in der Weise geführt, wie sich später der Bearbeitungsautomat selbst bewegen soll, die Bewegungen des Programmiergerätes werden in einer Speicher- und Steuereinheit 25 gespeichert. Diese Speicher- und Steuereinheit steuert mit diesen Daten, die von dem Programmiergerät 24 in einer der Kabinen erzeugt worden sind, dann schliessend den Bearbeitungsautomaten 22 dieser Kabine, aber in genau derselben Weise auch den identischen Bearbeitungsautomaten 22 in der anderen Kabine. Dies ist in der Darstellung der Figur 2 durch Leitungen 26 und 27 dargestellt. Es ist also möglich, in einer Kabine die Bewegungsabläufe auch für die anderen Kabinen mit zu programmieren, d.h. die Programmierung kann erfolgen, ohne dass die Bearbeitungsvorgänge vollständig unterbrochen werden, denn die andere Kabine steht weiterhin auch während der Programmierung zur normalen Behandlung zur Verfügung.

Diese Art der Programmierung kann selbstverständlich in genau derselben Weise auch bei einer Anlage erfolgen, die mehr als nur zwei Kabinen aufweist, beispielsweise bei der Anlage der Figur 1. Bei dieser Anlage können während des Programmierens drei der vier Kabinen für die normale Bearbeitung Verwendung finden, beim Programmieren fällt also nur eine geringe Kapazität aus.

Geringe Kapazitätsausfälle treten auch bei Störungen an einer der Kabinen bzw. den dort angeordneten Bearbeitungsgeräten auf, da alle anderen Kabinen ungestört weiterarbeiten können. Je höher die Zahl der Kabinen ist, desto geringer ist die Störung bei Ausfall einer Kabine.

**Patentansprüche**

1. Vorrichtung zur Oberflächenbearbeitung von Kraftfahrzeugkarossen, insbesondere zum Lakkieren, mit einer eine Anzahl von Karossen hintereinander längs einer Vorschubstrecke (2) bewegenden Transporteinrichtung und mit längs der Vorschubstrecke stationär angeordneten Bearbeitungsgeräten (19, 20, 21; 22), welche die vorbeibewegten Karossen bearbeiten, dadurch gekennzeichnet, dass seitlich der Vorschubstrecke (2) mindestens zwei Stellplätze (13) für die Karossen (1) vorgesehen sind, dass jedem Stellplatz (13) eine Verschiebeeinrichtung (15) zugeordnet ist, welche eine Karosse (1) von der Vorschubstrecke (2) quer zu dieser auf den Stellplatz (13) und nach einer Verweildauer auf diesem wieder quer zur Vorschubstrecke (2) auf diese zurücktransportiert, dass auf dem Stellplatz (13) Bearbeitungsgeräte (19, 20, 21; 22) angeordnet sind, welche die stationär auf dem Stellplatz (13) verweilende Karosse (1) bearbeiten, und dass die Karosse (1) auf dem Stellplatz (13) die Vorschubstrecke (2) freigibt, so dass längs der Vorschubstrecke (2) Karossen (1) an dem Stellplatz (13) vorbeitransportiert werden können.

2. Vorrichtung nach Anspruch 1, dadurch gekennzeichnet, dass die Verschiebeeinrichtung (15, 16) die Karosse (1) nach dem quer zur Vorschubstrecke (2) erfolgenden Entfernen von der Vorschubstrecke (2) parallel zu dieser auf den Stellplatz (13) verschiebt und sie nach der Verweildauer zunächst parallel zur Vorschubstrecke (2) und anschliessend quer dazu wieder auf die Vorschubstrecke (2) zurückverschiebt.

3. Vorrichtung nach Anspruch 1 oder 2, dadurch gekennzeichnet, dass zwei Stellplätze (13) auf gegenüberliegenden Seiten der Vorschubstrecke (2) paarweise angeordnet sind.

4. Vorrichtung nach Anspruch 1, 2 oder 3, dadurch gekennzeichnet, dass in Vorschubrichtung hintereinander mehrere Stellplätze (13) angeordnet sind.

5. Vorrichtung nach einem der voranstehenden Ansprüche, dadurch gekennzeichnet, dass die Bearbeitungsgeräte (19, 20, 21; 22) auf allen Stellplätzen (13) gleich sind und dieselben Bearbeitungsschritte ausführen.

6. Vorrichtung nach einem der voranstehenden Ansprüche, dadurch gekennzeichnet, dass jede Karosse (1) längs der Vorschubstrecke (2) nur auf einen Stellplatz (13) verschoben wird, dass die Stellplätze (13) von aufeinanderfolgenden Karossen (1) nacheinander besetzt werden und dass die Karossen (1) in derselben Reihenfolge, in der sie auf die Stellplätze (13) verschoben werden, wieder auf die Vorschubstrecke (2) zurückgeschoben werden.

7. Vorrichtung nach Anspruch 6, dadurch gekennzeichnet, dass eine Karosse erst vom Stellplatz (13) auf die Vorschubstrecke (2) verschoben wird, wenn alle nachfolgend zu besetzenden Stellplätze (13) besetzt sind.

8. Vorrichtung nach einem der voranstehenden Ansprüche, dadurch gekennzeichnet, dass die Vorschubgeschwindigkeit der Transporteinrichtung im Bereich (11) der Stellplätze (13) um einen Faktor grösser ist als die Vorschubgeschwindigkeit vor und gegebenenfalls nach den Stellplätzen (13), der mindestens durch die Zahl der Stellplätze (13) gegeben ist.

9. Vorrichtung nach Anspruch 8, dadurch gekennzeichnet, dass der Faktor etwa zweimal so gross ist wie die Zahl der Stellplätze (13).

10. Vorrichtung nach einem der Ansprüche 2 bis 9, dadurch gekennzeichnet, dass auf jedem Stellplatz (13) an mindestens einer Längsseite der Karosse (1) Bearbeitungsgeräte (19, 20; 22) angeordnet sind.

11. Vorrichtung nach einem der voranstehenden Ansprüche, dadurch gekennzeichnet, dass an jedem Stellplatz (13) längs des senkrecht zur Vorschubstrecke (2) verlaufenden Verschiebeweges Bearbeitungsgeräte (17, 18) angeordnet sind, die die Karossen (1) während der Verschiebung senkrecht zur Vorschubstrecke (2) bearbeiten.

12. Vorrichtung nach einem der Ansprüche 2 bis 11, dadurch gekennzeichnet, dass an dem Stellplatz (13) ein Bearbeitungsgerät (21) angeordnet ist, welches beim parallel zur Vorschubstrecke (2) erfolgenden Verschieben der Karosse (1) auf den Stellplatz (13) durch deren Verschiebebewegung durch eine Öffnung der Karosse (1) in deren Inneres eintaucht.

13. Vorrichtung nach einem der voranstehenden Ansprüche, dadurch gekennzeichnet, dass jeder Stellplatz (13) im Innern einer abgeschlossenen Kabine (12) angeordnet ist, die nur im Bereich des quer zur Vorschubstrecke (2) verlaufenden Verschiebeweges zur Vorschubstrecke (2) hin offen ist.

14. Vorrichtung nach einem der vorangehenden Ansprüche, dadurch gekennzeichnet, dass an einem der Stellplätze (13) eine Programmiereinrichtung (24) für die Bearbeitungsgeräte (22) eines Stellplatzes (13) vorgesehen ist, durch die alle gleichartigen Bearbeitungsgeräte (22) an allen Stellplätzen (13) gemeinsam programmierbar sind.

**Claims**

1. Device for the protection treatment of motor vehicle bodies, in particular painting, comprising transport means for conveying a number of vehicle bodies one after the other along a feed line (2) and also comprising stationary machines (19, 20, 21; 22) arranged along the feed line for treating the vehicle bodies moving past, characterized in that at least two spaces (13) for placement of the vehicle bodies (1) are provided laterally of the feed line (2), that a displacing means (15) is associated with each space (13) for transferring a vehicle body (1) from said feed line (2) to said space (13) in a transverse direction to said feed line and, after a holding period, returning said vehicle body in a transverse direction to said feed line (2), that machines (19, 20, 21; 22) are arranged at said space (13) for treating the vehicle body (1) while stationary on said space (13), and that the vehicle body (1) on said space (13) clears the feed line (2) so that vehicle bodies (1) are transportable along said feed line (2) past said space (13).

2. Device as defined in claim 1, characterized in that, after the vehicle body (1) has been removed from said feed line (2) in a transverse direction thereto, the displacing means (15, 16) move said vehicle body (1) in a direction parallel to said feed line (2) into said space (13) and, after said holding period, move said vehicle body (1) parallel and then transversely to said feed line (2) to return said vehicle body (1) to said feed line (2).

3. Device as defined in claims 1 or 2, characterized in that two spaces (13) are arranged as a pair on opposite sides of said feed line (2).

4. Device as defined in claims 1, 2 or 3, characterized in that a plurality of spaces (13) are arranged in series in the direction of feed.

5. Device as defined in any of the preceding claims, characterized in that the machines (19, 20, 21; 22) for treating the vehicle bodies are the same at all the spaces (13) and carry out the same operations.

6. Device as defined in any of the preceding claims, characterized in that each vehicle body (1) is transferred into only one space (13) along the feed line (2), that said spaces (13) are occupied one after the other by successive vehicle bodies (1), and that said vehicle bodies (1) are returned to said feed line (2) in the same order in which they are transferred to said spaces (13).

7. Device as defined in claim 6, characterized in that a vehicle body will not be returned from the space (13) to the feed line (2) until all the subsequent spaces (13) to be occupied are occupied.

8. Device as defined in any of the preceding claims, characterized in that the rate of feed of the transport means in the area (11) of the spaces (13) is greater by one factor than the rate of feed upstream and, if necessary, downstream of said spaces (13), said factor being determined at least by the number of spaces (13).

9. Device as defined in claim 8, characterized in that said factor is approximately twice as great as the number of spaces (13).

10. Device as defined in any of claims 2 to 9, characterized in that machines (19, 20; 22) for treating the vehicle body (1) are arranged at each space (13) on at least one longitudinal side of said vehicle body (1).

11. Device as defined in any of the preceding claims, characterized in that machines (17, 18) are arranged at each space (13) along the path of displacement running at right angles to the feed line (2), said machines treating said vehicle bodies (1) while they are being displaced transversely to said feed line (2).

12. Device as defined in any of claims 2 to 11, characterized in that the space (13) is provided with a machine (21) which enters the interior of the vehicle body (1) through an opening therein as a result of displacement of said vehicle body (1) into said space (13) in a transverse direction to said feed line (2).

13. Device as defined in any of the preceding claims, characterized in that each space (13) is arranged in the interior of an enclosed booth (12) which is open towards the feed line (2) only in the area of the path of displacement running at right angles to said feed line (2).

14. Device as defined in any of the preceding claims, characterized in that a programming device (24) is provided at one of the spaces (13) for the machines (22) of one space (13), said programming device programming all the machines (22) of the same type at all the spaces (13) with the same program.

**Revendications**

1. Installation pour le traitement de surface de carrosseries de véhicules automobiles, en particulier dispositif de peinture, comprenant un dispositif transporteur qui fait circuler un certain nombre de carrosseries les unes à la suite des autres le long d'une voie d'avance (2), et des appareils de traitement (19, 20, 21; 22), agencés en position fixe le long de la voie d'avance et qui traitent les carrosseries qui circulent au droit de ces appareils, caractérisée en ce que, latéralement à la voie d'avance (2), il est prévu au moins deux stations (13) pour les carrosseries (1), en ce qu'à chaque station (13), est associé un dispositif de translation (15), qui transporte une carrosserie (1), depuis la voie d'avance (2) jusqu'à la station (13), par un déplacement transversal à cette voie puis, après un certain temps de séjour sur cette station, renvoie la carrosserie à la voie d'avance (2) par un déplacement transversal à cette voie, en ce que, sur la station (13) sont agencés des appareils de traitement (19, 20, 21; 22) qui traitent la carrosserie (1) séjournant en position fixe sur la station (13) et en ce que la carrosserie (1) placée sur la station (13) dégage la voie d'avance (2), de sorte que les carrosseries (1) peuvent être transportées le long de la voie d'avance (2) en passant au droit de la station (13).

2. Installation selon la revendication 1, caractérisée en ce que, après que la carrosserie a été éloignée de la voie d'avance (2) par un déplacement transversal à la voie d'avance (2), le dispositif de translation (15, 16) déplace la carrosserie (1) parallèlement à cette voie d'avance, pour l'amener à la station (13) puis qu'après le temps de séjour, il la ramène sur la voie d'avance (2) tout d'abord par un déplacement parallèle à la voie d'avance (2), puis par un déplacement transversal à cette voie.

3. Installation selon la revendication 1 ou 2, caractérisée en ce que deux stations (13) sont disposées par paires sur des côtés opposés de la voie d'avance (2).

4. Installation selon la revendication 1, 2 ou 3, caractérisée en ce que plusieurs stations (13) sont agencées l'une à la suite de l'autre dans la direction de l'avance.

5. Installation selon l'une des revendications précédentes, caractérisée en ce que les appareils de traitement (19, 20, 21; 22) sont identiques et exécutent les mêmes phases de travail sur toutes les stations (13).

6. Installation selon l'une des revendications précédentes, caractérisée en ce que, sur la longueur de la voie d'avance (2), chaque carrosserie n'est amenée que sur une station (13), en ce que les stations (13) sont occupées les unes après les autres par des carrosseries (1) successives et en ce que les carrosseries (1) sont ramenées à la voie d'avance (2) dans le même ordre de succession que celui dans lequel elles ont été amenées aux stations (13).

7. Installation selon la revendication 6, caractérisée en ce qu'une carrosserie n'est envoyée de la station (13) à la voie d'avance (2) que lorsque toutes les stations (13) qui doivent être occupées ensuite sont occupées.

8. Installation selon l'une des revendications précédentes, caractérisée en ce que, dans la région (11) des stations (13), la vitesse d'avance du transporteur est supérieure à la vitesse d'avance en amont et, éventuellement, en aval des stations (13), d'un facteur qui est d'une valeur au moins égale à celle qui est définie par le nombre des stations (13).

9. Installation selon la revendication 8, caractérisée en ce que le facteur est au moins deux fois plus grand que le nombre des stations (13).

10. Installation selon une des revendications 2 à 9, caractérisée en ce que, sur chaque station (13), des appareils de traitement (19, 20; 22) sont disposés au moins sur un côté longitudinal de la carrosserie (1).

11. Installation selon une des revendications précédentes, caractérisée en ce que, sur chaque station (13), le long du trajet de translation qui s'étend perpendiculairement à la voie d'avance (2) sont agencés des appareils de traitement (17, 18) qui traitent les carrosseries (1) pendant la translation qu'elles décrivent perpendiculairement à la voie d'avance (2).

12. Installation selon une des revendications 2 à 11, caractérisée en ce que, sur la station (13) est agencé un appareil de traitement (21) qui, pendant la translation de la carrosserie (1) aboutissant à la station (13) et qui s'effectue parallèlement à la voie d'avance (2), plonge à l'intérieur de la carrosserie (1) à travers une ouverture de cette carrosserie, pendant le mouvement de translation de cette carrosserie.

13. Installation selon une des revendications précédentes, caractérisée en ce que chaque station (13) est agencée à l'intérieur d'une cabine fermée (12) qui n'est ouverte que dans la région du trajet de translation aboutissant à la voie d'avance (2) et qui s'étend transversalement à la voie d'avance (2).

14. Installation selon une des revendications précédentes, caractérisée en ce que, sur une des stations (13), est prévu un dispositif de programmation (24) pour les appareils de traitement (22) d'une station (13), au moyen duquel on peut programmer simultanément tous les appareils de traitement (22) du même type situés sur toutes les stations (13).

# Fig. 1

Fig. 2

0 108 289